Europäisches Patentamt

European Patent Office

Office européen des brevets

(11) Veröffentlichungsnummer: **0 369 272**

**A2**

(12) **EUROPÄISCHE PATENTANMELDUNG**

(21) Anmeldenummer: **89120454.7**

(22) Anmeldetag: **06.11.89**

(51) Int. Cl.⁵: **F16P 3/12, D21G 5/00**

(30) Priorität: **18.11.88 DE 3839056**

(43) Veröffentlichungstag der Anmeldung:
**23.05.90 Patentblatt 90/21**

(84) Benannte Vertragsstaaten:
**BE FR IT NL SE**

(71) Anmelder: **Kleinewefers GmbH**
**Kleinewefersstrasse 25**
**D-4150 Krefeld 1(DE)**

(72) Erfinder: **Fenzau, Hilmar**
**Adlerstrasse 19**
**D-4052 Korschenbroich(DE)**
Erfinder: **Kayser, Franz**
**Utrechter Strasse 8**
**D-4170 Geldern(DE)**
Erfinder: **Schlunke, Jürgen, Dipl.-Ing.**
**Uerdinger Strasse 362**
**D-4150 Krefeld(DE)**
Erfinder: **Wilke, Hartmut, Dipl.-Ing.**
**Kretenbäskes Weg 24**
**D-4150 Krefeld 29(DE)**

(74) Vertreter: **Knoblauch, Ulrich, Dr.-Ing.**
**Kühhornshofweg 10**
**D-6000 Frankfurt am Main 1(DE)**

(54) **Schutzvorrichtung für den Einlaufspalt von Kalandern und anderen Walzenmaschinen.**

(57) Eine Schutzvorrichtung für den Einlaufspalt (6) von Kalandern und anderen Walzenmaschinen weist als Träger ein Hohlprofil (11) auf. Es trägt zwei Leisten (21, 22), die bis nahe an die den Spalt (6) bildenden Walzen (1, 2) reichen und abschnittsweise durch Einstellvorrichtungen (28, 30) verstellbar sind. Das Hohlprofil (11) bildet einen Fluidkanal (19). Auf diese Weise ergibt sich eine platzsparende Bauweise, wenn die Schutzvorrichtung gleichzeitig mit einer Vorrichtung zur Fluidbeaufschlagung der Bahn oder einer Walze verwendet wird.

## Schutzvorrichtung für den Einlaufspalt von Kalandern und anderen Walzenmaschinen

Die Erfindung bezieht sich auf eine Schutzvorrichtung für den Einlaufspalt von Kalandern und anderen Walzenmaschinen, mit einem ein Hohlprofil aufweisenden Träger, der an seinen Enden gehalten ist, im Betrieb eine feste Stellung etwa parallel zum Spalt einnimmt, mit zwei am Träger angebrachten Leisten, die je bis nahe an eine der den Spalt bildenden Walzen reichen, und mit längs des Trägers angeordneten Einstellvorrichtungen, mit denen Leistenabschnitte am Träger verstellbar sind.

Bei einer bekannten Schutzvorrichtung dieser Art (DE-PS 37 19 305) besteht der Träger aus einem Hohlprofil, an dessen Außenseite die Leisten angelenkt sind und durch welches sich Stangen der Verstellvorrichtung erstrecken, mit denen die Leisten verschwenkt werden können. Durch die Verstellbarkeit ist es möglich, den Forderungen der Berufsgenossenschaft nachzukommen, wonach die Leisten durchgehend ein Sicherheitsabstand von 8 mm oder weniger von den den Spalt begrenzenden Walzen haben müssen. Durch die Verstellung lassen sich Abweichungen ausgleichen, die durch unterschiedliche Durchbiegung von Träger und Walzen, durch thermische Verformungen, durch Durchmesseränderungen der Walzen u.dgl. entstehen.

Es ist ferner bekannt, die Walzen oder die zu behandelnde Bahn über die gesamte Breite mit einem Fluid zu beaufschlagen. Hier gibt es Dampfbefeuchter (DE-05 35 03 448, DE-AS 12 95 993), mit warmer oder kalter Luft betriebene Heiz- oder Kühlvorrichtungen (US-PS 29 93 432), Blasrohre und dergleichen mehr. In allen Fällen erstreckt sich ein Fluidkanal entsprechenden Querschnitts längs der Walzen. Dieser Fluidkanal besitzt in der Regel mindestens eine Reihe von der Walze oder Bahn zugewandten Austrittsöffnungen.

Schwierigkeiten bereitet es, wenn die letztgenannten Vorrichtungen in der Nähe des Einlaufspaltes angeordnet werden sollen, weil dann die Einbauten verhältnismäßig viel Platz benötigen, was zu einer unerwünschten Verlängerung der Bahnwege zwischen den Spalten führt.

Der Erfindung liegt die Aufgabe zugrunde, eine Schutzvorrichtung der eingangs beschriebenen Art anzugeben, die eine platzsparende Bauweise ermöglicht.

Dieses Aufgabe wird erfindungsgemäß dadurch gelöst, daß das Hohlprofil einen Fluidkanal bildet.

Bei dieser Konstruktion bilden der Träger für die Schutzleisten und der Fluidkanal für eine Befeuchtungsvorrichtung oder eine andere mit Fluidzufuhr arbeitende Vorrichtung ein und dasselbe Bauteil. Entsprechend gering ist der Platzbedarf und der zwischen zwei Spalten erforderliche Bahnweg, was die Gefahr des Flatterns und der Faltenbildung herabsetzt. Ein Träger, der über die Maschinenbreite eine ausreichende Stabilität haben soll, besitzt auch einen genügend großen Querschnitt, um als Fluidkanal dienen zu können.

Allerdings muß darauf geachtet werden, daß das Fluid nicht an einer unerwünschten Stelle aus dem Hohlprofil austritt. Daher muß dort, wo die Einstellvorrichtung durch die Wand des Hohlprofils hindurchtritt, eine entsprechende Dichtung vorgesehen werden.

Wesentlich günstiger ist es allerdings, wenn die gesamten Einstellvorrichtungen an der Außenseite des Hohlprofils angebracht sind. Die genannten Dichtungen können dann entfallen und brauchen auch nicht wänrend des Betriebs überwacht oder ausgewechselt zu werden.

Insbesondere ist es vorteilhaft, daß das Hohlprofil wenigstens eine Reihe von Austrittsöffnungen aufweist und die Leisten sowie die Einstellvorrichtungen in Umfangsrichtung gegenüber den Austrittsöffnungen versetzt angeordnet sind. Auf diese Weise ist dafür gesorgt, daß die Leisten und ihre Einstellvorrichtungen nicht das ausrretende Fluid behindern und dadurch eine ungleichmäßige Beaufschlagung der Bahn- oder Walzenoberfläche verursachen.

Bei einem bevorzugten Ausführungsbeispiel ist dafür gesorgt, daß wenigstens eine Leiste durch federnde Mittel in Richtung auf die zugehörige Walze gedrückt und durch einen mit einem Verstellelement verbundenen Zuggurt der Einstellvorrichtung in seiner Einstellage gehalten ist. Die Verwendung eines Zuggurts, der als Seil, Band, Lirze o.dgl. ausgebildet sein kann und aus Textilwerkstoff, Metall, wie Stahl und anderem, bestehen kann, führt in Verbindung mit den federnden Mitteln zu einer einfachen Einstellung der Leiste.

Insbesondere kann der Zuggurt an der Oberfläche des Hohlprofils umgelenkt sein, so daß es auf eine Zugänglichkeit der Leiste bei der Einstellung nicht ankommt.

Eine besonders einfache Konstruktion ergibt sich, wenn die federnden Mittel durch die Leiste mit dem Hohlprofil verbindende Blattfedern gebildet sind. Diese Blattfedern dienen dann als Befestigungsmittel und Vorspannmittel.

Sehr günstig ist es, wenn das Hohlprofil einen im wesentlichen reckteckigen Umriß hat. Die flachen Seitenwände sind besonders gut für die Befestigung der Halterungen für die Verstellelemente und für die Leisten geeignet. Außerdem ergibt sich eine hohe Steifigkeit.

Insbesondere sollen die Halterungen für die Verstellelemente der beiden Leisten in Umfangsrichtung nicht oder wenig gegeneinander versetzt sein. Die Verstellelemente beider Leisten sind daher einander benachbart und können von einer Bedienungsperson bequem betätigt werden.

Bei einer bevorzugten Ausführungsform ist dafür gesorgt, daß die Austrittsöffnungen in einer Seitenwand des Hohlprofils, die Halterungen für die eine Leiste und für die Verstellelemente beider Leisten an der gegenüberliegenden Seitenwand und die Halterung für die andere Leiste an der dazwischen befindlichen Seitenwand angeordnet sind. Dies ergibt eine äußerst gedrungene Bauweise, die insbesondere für einen Bahn-Dampfbefeuchter geeignet ist.

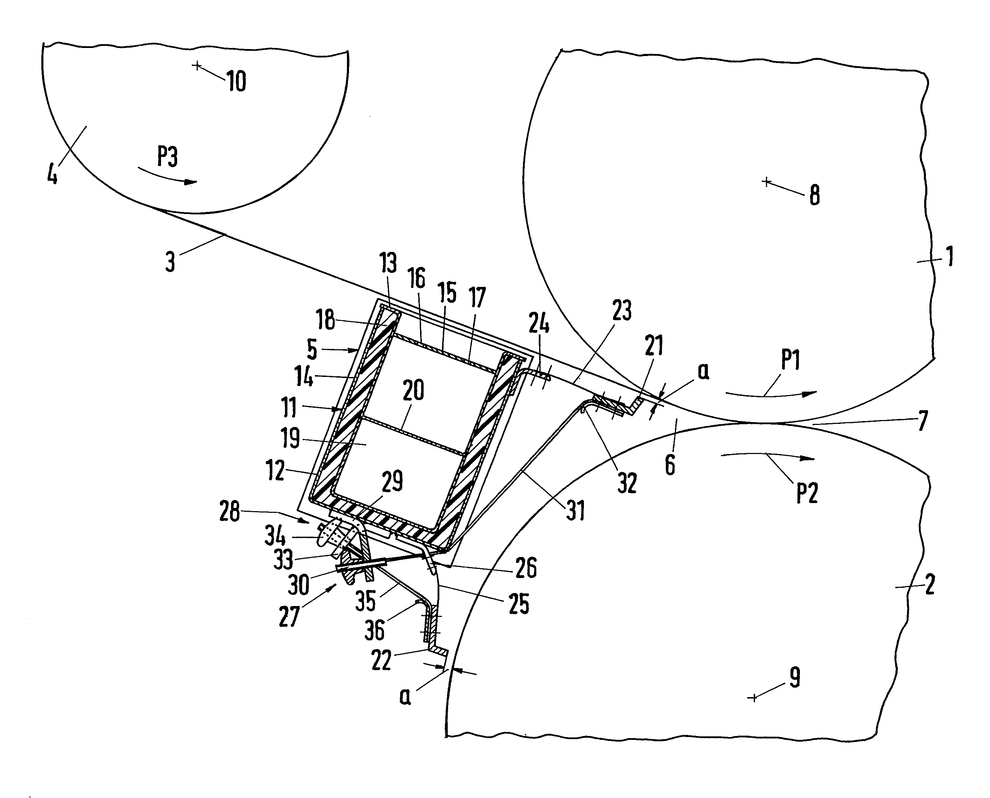

Die Erfindung wird nachstehend anhand eines in der Zeichnung dargestellten, bevorzugten Ausführungsbeispiels näher erläutert.

Die einzige Figur zeigt einen Teilquerschnitt durch den Spaltbereich eines Kalanders.

Zwischen einer harten Walze 1 und einer mit einem elastischen Bezug versehenen Walze 2 wird eine Papierbahn 3 druckbehandelt. Sie kommt von einer Leitwalze 4, verläuft über einen Dampfbefeuchter 5, tritt in einen Einlaufspalt 6 ein und verläßt das Walzenpaar durch einen Auslaufspalt 7. Die Walzen 1, 2 und 4 drehen sich in Richtung der Pfeile P1, P2 und P3 um ihre jeweiligen Achsen 8, 9 und 10.

Der Dampfbefeuchter 5 weist ein Hohlprofil 11 auf, das durch ein äußeres U-förmiges Profilteil 12, ein mit stirnseitigen Flanschen 13 versehenes inneres U-Profilteil 14 und eine Verschlußplatte 15, in der sich zwei Reihen von Austrittsöffnungen 16 und 17 befinden, gebildet ist. Der Hohlraum zwischen den U-Profilteilen 12 und 14 ist mit einer Wärmeisolation 18 ausgefüllt. Im Innern ergibt sich ein Fluidkanal 19, durch den Heißdampf zu den Austrittsöffnungen 16 und 17 geleitet wird. Der Fluidkanal 19 kann durch eine Trennwand 20 oder mehrere Trennwände in mehrere Kanäle unterteilt werden, beispielsweise wenn verschiedenen Abschnitten des Dampfbefeuchters Dampf mit unterschiedlicher Temperatur oder unterschiedlichem Druck zugeführt werden sollen. Der Dampfbefeuchter 5 ist als ganzes um die Achse 8 der harten Walze 1 schwenkbar, um den Einlaufspalt 6 zugänglich zu machen.

Es sind zwei Leisten 21 und 22 vorgesehen, die einen Fingerschutz am Einlaufspalt 6 bilden. Jede Leiste besteht aus mehreren axial aufeinanderfolgenden Abschnitten, die einzeln derart einstellbar sind, daß ihr Abstand a von der Walzenoberfläche 8 mm beträgt oder kleiner ist, wie dies von der Berufsgenossenschaft gefordert wird.

Die Leiste 21 ist über Blattfedern 23 an einer Halterung 24, die Leiste 22 über Blattfedern 25 an einer Halterung 26 befestigt. Die Blattfedern spannen die Leisten 21 und 22 in Richtung auf die Walzen 1 bzw. 2 vor.

Ferner gibt es zwei Verstellvorrichtungen 27 und 28. Die Verstellvorrichtung 27 besitzt ein in einer Halterung 29 verschraubbares Verstellelement 30, an welchem ein Zuggurt 31 befestigt ist. Dieser ist nach Umlenkung am Hohlprofil 11 und auf einer Stützschiene 32 mit der Leiste 21 verbunden. In ähnlicher Weise ist ein in einer Halterung 33 verschraubbares Verstellelement 34 mit einem Zuggurt 35 verbunden, der nach Umlenkung auf einer Stützschiene 36 an der Leiste 22 angreift. Über die Länge der Leisten 21 und 22 sind mehrere solcher Verstellvorrichtungen 27 und 28 vorgesehen. Verwendet man in einzelne Abschnitte unterteilte Leisten, können für jeden Abschnitt zwei solcher Verstellvorrichtungen vorhanden sein. Verwendet man eine durchgehende, in sich biegbare Leiste, ist eine dieser Ausbildung entsprechende Anzahl von Verstellvorrichtungen notwendig.

Im vorliegenden Fall hat das Hohlprofil 11 im wesentlichen rechteckigen Querschnitt. An der einen Seitenwand befinden sich die Austrittsöffnungen 16 und 17. An der gegenüberliegenden Seitenwand befinden sich die Halterungen 29 und 33 für die Verstellelemente 30 und 34 sowie die Halterung 26 für die Leiste 22. An der dazwischen befindlichen Seitenwand ist die Halterung 24 für die Leiste 21 angebracht. Hierbei zeigt sich, daß die im Betrieb nicht zugängliche Leiste 21 wegen der Umlenkung des Zuggurtes 31 an der Kante des äußeren U-Profils 12 ohne Schwierigkeiten die gewünschte Abstandseinstellung erfahren kann.

Selbstverständlich kann das Hohlprofil auch andere Querschnitte, wie kreisrund oder quadratisch, haben, wenn dies den konstruktiven Gegebenheiten entspricht. Statt des Dampfbefeuchters für die Bahn 3 kann auch eine andere Vorrichtung zum Beheizen, Kühlen oder Beblasen der Bahn oder einer der Walzen mit der Leistenschutzvorrichtung kombiniert werden.

Die Einrichtung eignet sich insbesondere für die Behandlung von Papierbähnen, kann aber auch für andere Bahnmaterialien wie Textilien, Folien u.dgl. eingesetzt werden.

## Ansprüche

1. Schutzvorrichtung für den Einlaufspalt von Kalandern und anderen Walzenmaschinen, mit einem ein Hohlprofil aufweisenden Träger, der an seinen Enden gehalten ist, in Betrieb eine feste Stellung etwa parallel zum Spalt einnimmt, mit zwei am Träger angebrachten Leisten, die je bis nahe an eine der den Spalt bildenden Walzen reichen, und mit längs des Trägers angeordneten Einstellvorrichtungen, mit denen Leistenabschnitte am Träger verstellbar sind, dadurch gekennzeichnet, daß das Hohlprofil (11) einen Fluidkanal (19) bildet.

2. Schutzvorrichtung nach Anspruch 1, dadurch gekennzeichnet, daß die gesamten Verstellvorrichtungen (27, 28) an der Außenseite des Hohlprofils (11) angebracht sind.

3. Schutzvorrichtung nach Anspruch 1 oder 2, dadurch gekennzeichnet, daß das Hohlprofil (11) wenigstens eine Reihe von Austrittsöffnungen (16, 17) aufweist und die Leisten (21, 22) sowie die Verstellvorrichtungen (27, 28) in Umfangsrichtung gegenüber den Austrittsöffnungen versetzt angeordnet sind.

4. Schutzvorrichtung nach einem der Ansprüche 1 bis 3, dadurch gekennzeichnet, daß wenigstens eine Leiste (21, 22) durch federnde Mittel (23, 25) in Richtung auf die zugehörige Walze (1, 2) gedrückt und durch einen mit einem Verstellelement (30, 34) verbundenen Zuggurt (31, 35) der Verstellvorrichtung (27, 28) in seiner Einstellage gehalten ist.

5. Schutzvorrichtung nach Anspruch 4, dadurch gekennzeichnet, daß der Zuggurt (31, 35) an der Oberfläche des Hohlprofils (11) umgelenkt ist.

6. Schutzvorrichtung nach Anspruch 4 oder 5, dadurch gekennzeichnet, daß die federnden Mittel (23, 25) durch die Leiste (21, 22) mit dem Hohlprofil (11) verbindende Blattfedern gebildet sind.

7. Schutzvorrichtung nach einem der Ansprüche 1 bis 6, dadurch gekennzeichnet, daß das Hohlprofil (11) einen im wesentlichen rechteckigen Umriß hat.

8. Schutzvorrichtung nach einem der Ansprüche 1 bis 7, dadurch gekennzeichnet, daß Halterungen (29, 33) für die Verstellelemente (30, 34) der beiden Leisten (21, 22) in Umfangsrichtung nicht oder wenig gegeneinander versetzt sind.

9. Schutzvorrichtung nach einem der Ansprüche 3, 7 oder 8, dadurch gekennzeichnet, daß die Austrittsöffnungen (16, 17) in einer Seitenwand des Hohlprofils (11), die Halterungen (26, 29, 33) für die eine Leiste (22) und für die Verstellelemente (30, 34) beider Leisten an der gegenüberliegenden Seitenwand und die Halterung (24) für die andere Leiste (21) an der dazwischen befindlichen Seitenwand angeordnet sind.